# EUROPEAN PATENT APPLICATION

(11) **EP 3 985 844 A1**
(43) Date of publication of application: **20.04.2022**
(21) Application number: 21213258.3
(22) Date of filing: 25.10.2016
(51) Int. Cl.: H02K 9/22

(54) **LAMINATED STATOR WITH COOLING LAMINATION LAYERS**

(30) Priority: 26.10.2015 US 201514922667
(62) Divisional of application: 16195452.4
(71) Applicant: Hamilton Sundstrand Corporation, Charlotte, NC 28217-4578 (US)
(72) Inventor: PAL, Debabrata, Hoffman Estates, IL 60195 (US); COLDWATE, Joseph Kenneth, Roscoe, IL 61073 (US); KOENIG, Andreas C., Rockford, IL 61114 (US)
(74) Representative: Dehns

(57) **Abstract**

A laminated stator for a motor includes a first plurality of stator laminations (120) with a first electrical conductivity and a first thermal conductivity, and a second plurality of stator laminations (122) with a second electrical conductivity and a second thermal conductivity, wherein the second electrical conductivity is lower than the first electrical conductivity, the second thermal conductivity is higher than the first thermal conductivity, and the second plurality of stator laminations (122) are disposed throughout the first plurality of stator laminations (120).

## Description

### BACKGROUND

The subject matter disclosed herein relates to motors, and more particularly, to a stator for a motor with laminations to facilitate cooling.

Environmental control systems can utilize electric motors to pressurize and move air for use within the cabin of an aircraft. The electric motor of the environmental control system, as well as other motors, may utilize air cooling to cool the motor during operation. Often air cooling may not provide for sufficient cooling of the motor during certain operating conditions.

### BRIEF SUMMARY

According to an embodiment, a laminated stator for a motor includes a first plurality of stator laminations with a first electrical conductivity and a first thermal conductivity, and a second plurality of stator laminations with a second electrical conductivity and a second thermal conductivity, wherein the second electrical conductivity is lower than the first electrical conductivity, the second thermal conductivity is higher than the first thermal conductivity, and the second plurality of stator laminations are disposed throughout the first plurality of stator laminations.

According to an embodiment, an environmental control system cooled by an airflow includes a motor cooling inlet to receive the airflow, and a motor including a rotor, and a laminated stator to receive the airflow from the motor cooling inlet, including a first plurality of stator laminations with a first electrical conductivity and a first thermal conductivity, and a second plurality of stator laminations with a second electrical conductivity and a second thermal conductivity, wherein the second electrical conductivity is lower than the first electrical conductivity, the second thermal conductivity is higher than the first thermal conductivity, and the second plurality of stator laminations are disposed throughout the first plurality of stator laminations.

Technical function of the embodiments described above includes a second plurality of stator laminations with a second electrical conductivity and a second thermal conductivity, wherein the second electrical conductivity is lower than the first electrical conductivity and the second thermal conductivity is higher than the first thermal conductivity.

Other aspects, features, and techniques of the embodiments will become more apparent from the following description taken in conjunction with the drawings.

### BRIEF DESCRIPTION OF THE DRAWINGS

The subject matter is particularly pointed out and distinctly claimed in the claims at the conclusion of the specification. The foregoing and other features, and advantages of the embodiments are apparent from the following detailed description taken in conjunction with the accompanying drawings in which like elements are numbered alike in the FIGURES:
FIG. 1 is a schematic view of one embodiment of an environmental control system;
FIG. 2 is a schematic view of one embodiment of a motor stator for use with the environmental control system of FIG. 1; and
FIG. 3 is end view of the motor stator of FIG. 2.

### DETAILED DESCRIPTION

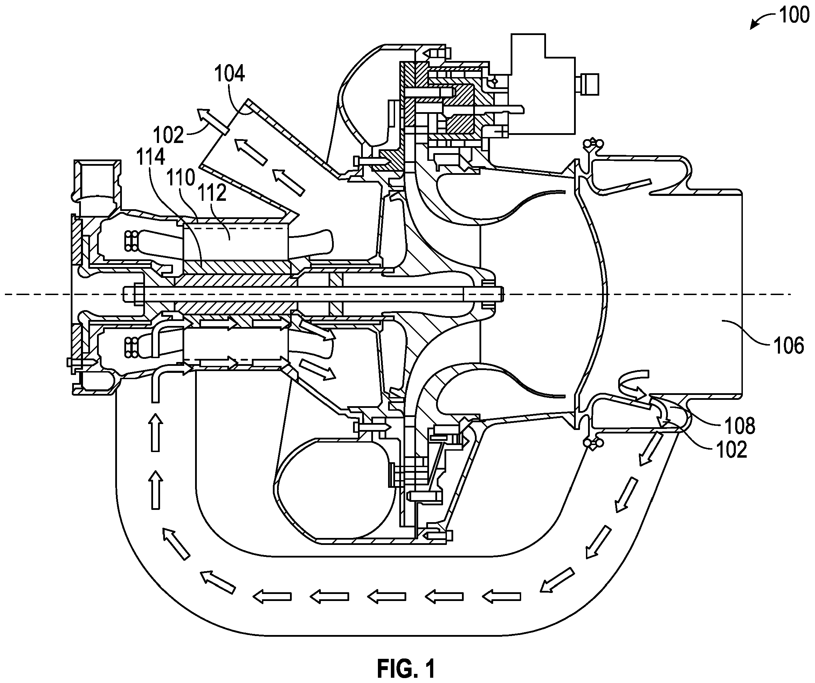

Referring now to the drawings, FIG. 1 shows an environmental control system 100. In the illustrated embodiment, the environmental control system 100 includes a motor 110 with a stator 112 and a rotor 114. In the illustrated embodiment, the motor 110 can be utilized to drive a compressor in the environmental control system 100 to provide environmental air for the cabin of an aircraft.

During operation, the motor 110 can generate heat. In the illustrated embodiment, airflow 102 can be utilized to air cool the motor 110. In the illustrated embodiment, airflow 102 is received from the compressor inlet 106 and is directed to the motor cooling inlet 108. The airflow 102 can flow through the motor stator 112 and exit through the cooling exit 104. In certain embodiments, the amount of airflow 102 is limited by operating conditions, such as high speed, high altitude operating conditions, which may not provide adequate cooling of the motor 110. In these operating conditions, conventional motors 110 may exceed target operating temperatures affecting reliability and performance. Advantageously, the stator 112 can include cooling lamination layers to increase heat transfer to remove heat from the stator 112.

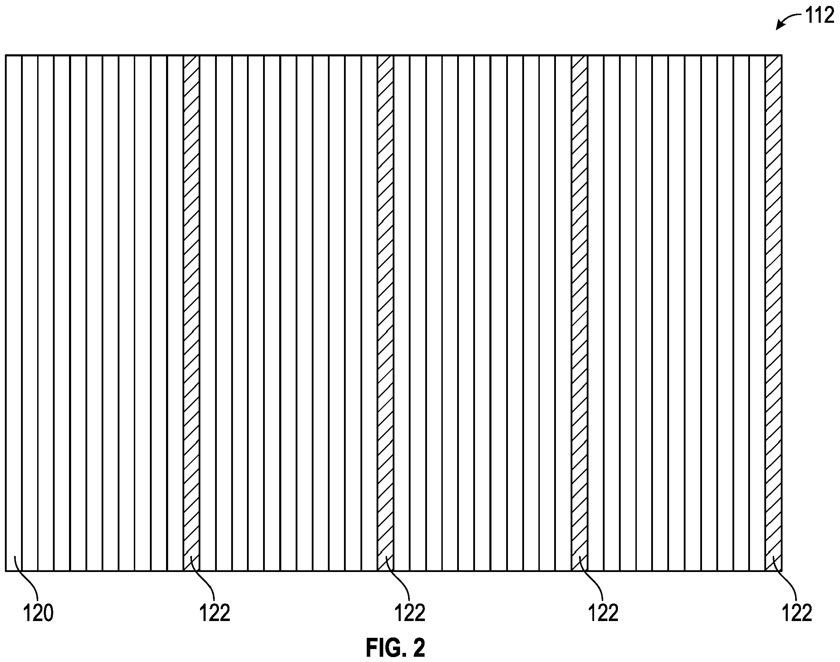

In FIG. 2, the motor stator 112 is shown. In the illustrated embodiment, the motor stator 112 is a laminated motor stator with conductive lamination layers 120 and cooling lamination layers 122. In certain embodiments, the motor 110 can be utilized with the environmental control system 100, while in other embodiments, the motor 110 and the motor stator 112 described herein can be used for any suitable application.

In the illustrated embodiment, the conductive lamination layers 120 and the cooling lamination layers 122 are stacked to form the motor stator 112. The conductive lamination layers 120 and the cooling lamination layers 122 can be bonded together to form the laminated stator 112.

In the illustrated embodiment, the conductive lamination layers 120 allow for normal electromagnetic operation of the motor stator 112. In the illustrated embodiment, a plurality of conductive lamination layers 120 can be layered or stacked to form the stator 112. Generally, the conductive lamination layers 120 have a high electrical conductivity and a relatively low thermal conductivity relative to the cooling lamination layers 122. In the illustrated embodiment, the conductive lamination layers 120 can be electrical steel, such as Arnon, or other suitable materials for forming a motor stator 112. During operation, the conductive lamination layers 120 can generate heat due to the electrical energy passing through the conductive lamination layers. In the illustrated embodiment, the conductive lamination layers 120 may conduct some heat to be removed by the airflow 102, however during typical operation the use of the conductive lamination layers 120 introduces additional heat into the stator 112.

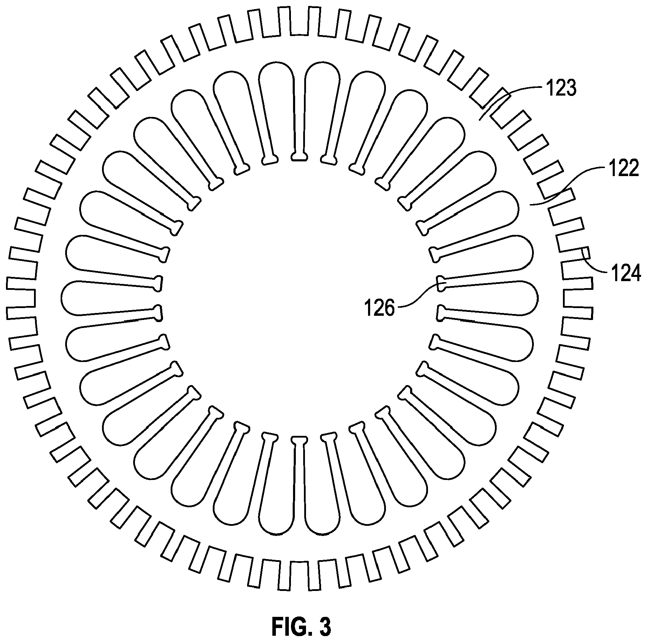

In the illustrated embodiment, the cooling lamination layers 122 can transfer and dissipate heat generated by the motor stator 112, and in particular the heat generated by the conductive lamination layers 120. In the illustrated embodiment, the cooling lamination layers 122 can be formed from annealed pyrolytic graphite. Advantageously, annealed pyrolytic graphite has a relatively high thermal conductivity (1700 W/m-K). Further, annealed pyrolytic graphite can provide generally anisotropic heat transfer. In other embodiments, the cooling lamination layers 122 can be formed from any suitable material with a low electrical conductivity and a high thermal conductivity relative to the conductive lamination layers 120. The heat generated by the conductive lamination layers 120 can be dissipated and moved out to the fins 124, 126 (as shown in FIG. 3) or otherwise to the edges or outermost surfaces of the cooling lamination layers 122 to facilitate heat transfer with the airflow 102. In the illustrated embodiment, it is desired for the cooling lamination layers 122 have a low electrical conductivity compared to the conductive lamination layers 120 to prevent from the cooling lamination layers 122 from introducing heat into the stator 112. Therefore, in certain embodiments, a greater amount of heat is removed from the cooling lamination layers 122 than is generated by the cooling lamination layers 122, allowing for effective cooling of the stator 112.

FIG. 3 shows an end view of the stator 112 illustrating a lamination shape 123. In certain embodiments, both the conductive lamination layers 120 and the cooling lamination layers 122 can have the lamination shape 123 shown. In the illustrated embodiment, a cooling lamination layer 122 is shown the with the lamination shape 123. In certain embodiments, the lamination shape 123 can have any suitable shape. In the illustrated embodiment, the lamination shape 123 can include inner motor teeth 126 and outer fins 124 to facilitate cooling of the stator 112. The inner motor teeth 126 can conduct heat towards the outer fins 124, and the outer fins 124 can increase surface area of both the conductive lamination layers 120 and the cooling lamination layers 122.

In the illustrated embodiment, the conductive lamination layers 120 and the cooling lamination layers 122 can have the same lamination shape 123. Advantageously, since the conductive lamination layers 120 and the cooling lamination layers 122 have the same lamination shape 123 ease of processing and assembly can be facilitated. After assembly, the conductive lamination layers 120 and the cooling lamination layers 122 can be glued and or bonded to form the stator 112.

In certain embodiments, the ratio of conductive lamination layers 120 to cooling lamination layers 122 can be twenty conductive lamination layers 120 to one cooling lamination layer 122. Based on a twenty to one ratio of conductive lamination layer 120 and the cooling lamination layer 122, this results in equivalent radial direction thermal conductivity of 113.2 W/m-K. In other embodiments, the ratio can be any suitable ratio to allow for suitable electrical and thermal performance of the stator 112. In certain embodiments, the thickness of each of the conductive lamination layers 120 and the cooling lamination layers 122 can be selected for desired thermal and electrical characteristics. In the illustrated embodiment, the length of the stator 112 is affected by the number of cooling lamination layers 122 in the stator 112. The introduction of cooling lamination layers 122 may lengthen the stator 112.

In the illustrated embodiment, the introduction of cooling lamination layers 122 allows for more effective cooling of motors 110 utilizing air cooling from an airflow 102. In certain embodiments, such as a motor 110 for use in an environmental control system 100, operating temperatures have been reduced from 236.9 C to 211 C, for worst case cooling and electrical load conditions, allowing for greater reliability of the motor 110.

The terminology used herein is for the purpose of describing particular embodiments only and is not intended to be limiting of the embodiments. While the description of the present embodiments has been presented for purposes of illustration and description, it is not intended to be exhaustive or limited to the embodiments in the form disclosed. Many modifications, variations, alterations, substitutions or equivalent arrangement not hereto described will be apparent to those of ordinary skill in the art without departing from the scope and spirit of the embodiments. Additionally, while various embodiments have been described, it is to be understood that aspects may include only some of the described embodiments. Accordingly, the embodiments are not to be seen as limited by the foregoing description, but are only limited by the scope of the appended claims.

The following clauses set out aspects of the invention that may not be presently claimed in this application but which may form the basis for future amendment or a divisional application
1. An environmental control system cooled by an airflow (102), comprising:
   a motor cooling inlet (108) to receive the airflow (102); and
   a motor (110) including:
      a rotor (114); and
      a laminated stator (112) to receive the airflow from the motor cooling inlet (108), including:
         a first plurality of stator laminations (120) with a first electrical conductivity and a first thermal conductivity; and
         a second plurality of stator laminations (122) with a second electrical conductivity and a second thermal conductivity, wherein the second electrical conductivity is lower than the first electrical conductivity, the second thermal conductivity is higher than the first thermal conductivity, and the second plurality of stator laminations (122) are disposed throughout the first plurality of stator laminations (120).
2. The environmental cooling system of clause 1, wherein the second plurality of stator laminations (122) are formed of annealed pyrolytic graphite.
3. The environmental cooling system of clause 1 or 2, wherein the first plurality of stator laminations (120) are formed of electrical steel.
4. The environmental cooling system of clause 1, 2 or 3, wherein a ratio between the first plurality of stator laminations (120) and the second plurality of stator laminations (122) is twenty to one.
5. The environmental cooling system of any of clause 1 to 4, wherein each of the first plurality of stator laminations (120) and each of the second plurality of stator laminations (122) have a common lamination shape.
6. The laminated stator of clause 5, wherein the common lamination shape includes at least one fin.
7. The environmental cooling system of any of clause 1 to 6, wherein a thickness of each of the first plurality of stator laminations (120) is greater than a thickness of each of the second plurality of stator laminations (122).

All the previously described preferred features mentioned above in relation to the laminated stator apply equally to the environmental control system described in these clauses.

## Claims

1. A laminated stator (112) for a motor (110), comprising:
a first plurality of stator laminations (120) with a first electrical conductivity and a first thermal conductivity; and
a second plurality of stator laminations (122) with a second electrical conductivity and a second thermal conductivity, wherein the second electrical conductivity is lower than the first electrical conductivity, the second thermal conductivity is higher than the first thermal conductivity, and the second plurality of stator laminations (122) are disposed throughout the first plurality of stator laminations (120).

2. The laminated stator of claim 1, wherein the second plurality of stator laminations (122) are formed of annealed pyrolytic graphite.

3. The laminated stator of claim 1 or 2, wherein the first plurality of stator laminations (122) are formed of electrical steel.

4. The laminated stator of any preceding claim, wherein a ratio between the first plurality of stator laminations (120) and the second plurality of stator laminations (122) is twenty to one.

5. The laminated stator of any preceding claim, wherein each of the first plurality of stator laminations (120) and each of the second plurality of stator laminations (122) have a common lamination shape.

6. The laminated stator of claim 5, wherein the common lamination shape includes at least one fin.

7. The laminated stator of any preceding claim, wherein a thickness of each of the first plurality of stator laminations (120) is greater than a thickness of each of the second plurality of stator laminations (122).

8. The laminated stator of any preceding claim, wherein the second plurality of stator laminations (122) are bonded to the first plurality of stator laminations (120).
